# EUROPEAN PATENT APPLICATION

(11) **EP 2 018 009 A1**
(43) Date of publication of application: **21.01.2009**
(21) Application number: 08275030.8
(22) Date of filing: 16.07.2008
(51) Int. Cl.: H04L 12/56, H04L 29/12

(54) **Communication system and method**

(30) Priority: 16.07.2007 GB 0713785
(71) Applicant: Cellcrypt Limited, Woking Surrey GU21 6BY (GB)
(72) Inventor: Poppe, Tobias, Woking Surrey GU21 6BY (GB)
(74) Representative: Exell, Jonathan Mark

(57) **Abstract**

A communication system and method include an intermediate router arranged to facilitate communication between any of a plurality of communication nodes over a data communications network. The intermediate router receives communications over the data communications network from a transmitting communication node for a receiving communication node. The communication includes a unique identifier of the transmitting and receiving communication node. The intermediate router includes a routing database, and is arranged to record the unique identifier of the transmitting communication node against the network address of the transmitting communication node from which the communication was received. The intermediate router is also arranged to route communications to receiving nodes by obtaining the recorded network address associated with the unique identifier of the receiving node and routing the communication to the recorded network address. The unique identifier is independent of the network address of a node to cater for changed in network address.

## Description

### Field of the Invention

The present invention relates to a communication method and system that are particularly suitable for providing voice over IP and in particular in changing environments or mobile networks.

### Background to the Invention

In voice over IP (VOIP) communications, voice communications are packetized and transmitted over an Internet Protocol (IP) based communications network.

VOIP requires a reasonable bandwidth and a stable connection over the IP based communications network to provide a good quality of service. Compression is commonly used to address problems of limited bandwidth but if a connection from the transmitting or receiving party to the IP based networks drops, the call may be lost.

IP based communication networks typically use transmission control protocol (TCP) packets for transmission of data. A prerequisite for TCP packets is that they must include the IP address of the transmitter and recipient. Each node connected to the internet or other IP network has a unique assigned IP address and it is this address that is used to route packets from transmitter to recipient. VOIP packets are no different - each VOIP packet typically includes the IP address of the transmitter and recipient so that the packets can be routed to their destination.

Whilst this arrangement works well where a transmitter and recipient has a static IP address, should the IP address change then a VOIP call would be disconnected as the transmitter and intermediate routers would not know of this change. This is particularly an issue with mobile devices because a new IP address is normally assigned to a mobile device if it moves from one wireless network to another (as would be the case if you moved out of range of one network and into the range of another).

An IP address may even change without the device moving to a different network. The mobile phone/device is at the discretion of the mobile operator. If the operator decides to assign new ip addresses to the phone it can do so.

### Statement of Invention

According to an aspect of the present invention, there is provided a communication system arranged to facilitate communication between a first and a second communication nodes over a data communications network, each of the first and second communication nodes including a unique identifier and is arranged to include their respective unique identifier and the unique identifier of a recipient node within communications, the unique identifier being independent of any network address assigned to the communication node, the communication system being arranged to receive communications from the first and second communication nodes for the other of the respective first and second communications node, wherein the communication system includes a routing database, the communication system being arranged to record the unique identifier of a communication node against the network address of the communication node in the routing database, the communication system being arranged to route communications to the communications nodes in dependence on the network address recorded against their respective unique identifier in the routing database.

Preferably, the communications system is further arranged to check the network address of a communications node against the routing database upon receipt of a communication from the communication node and to update the network address if different to the network address stored in the routing database.

Preferably, the communication comprises a voice over IP communication.

According to another aspect of the present invention, there is provided a communication system comprising:
an intermediate router; and,
a plurality of communication nodes, each of the first and second communication nodes includes a unique identifier and is arranged to include their respective unique identifier within communications, the unique identifier being independent of a network address assigned to the communication node, wherein the intermediate router is arranged to facilitate communication between any of the communication nodes over a data communications network, the intermediate router being arranged to receive communications over the data communications network from a transmitting one of the plurality of the communication nodes for a receiving one of the plurality of communication nodes, the communication including the unique identifier of the transmitting and receiving communication node, the intermediate router including a routing database, and being arranged to record the unique identifier of the transmitting communication node against the network address of the transmitting communication node from which the communication was received, the intermediate router being arranged to route communications to receiving nodes by obtaining the recorded network address associated with the unique identifier of the receiving node and routing the communication to the recorded network address.

Each of the communication nodes is preferably arranged to address communications to the intermediate router.

The intermediate router is preferably arranged to check the network address of a communications node against the routing database upon receipt of a communication from the communication node and to update the network address if different to the network address stored in the routing database.

The communication may comprise a user datagram protocol packet.

The network address may comprise an internet protocol address.

The communications system may further comprise a plurality of intermediate routers, each of the plurality of intermediate routers including a routing database and being arranged to synchronise its routing database with the routing databases of the others of the plurality of intermediate routers.

The communications system preferably comprises a voice over IP system and the communications comprise packetized voice data.

According to another aspect of the present invention, there is provided a communications method comprising:
assigning a unique identifier to each of a plurality of communication nodes, the unique identifier being independent of a network address associated with the communication node;
addressing communications to nodes using the unique identifier of the recipient communication node and identifying the origin of the communication using the unique identifier of the originating communication node;
directing the addressed communications to an intermediate router;
recording, at the intermediate router, the unique identifier and network address of the originating node;
identifying, at the intermediate router, the network address recorded against the unique identifier of the recipient node; and,
routing the communication to the identified network address.

Preferably, the method further comprises:
monitoring the network address of the originating node against its unique identifier and, if the network address changes, updating the recorded network address to the changed network address.

The method may further comprise synchronising the recorded unique identifiers and network addresses amongst a plurality of intermediate routers.

The method may further comprise transmitting the communications using a user datagram protocol.

In one embodiment of the present invention, a voice over IP system includes a transmitter, a recipient and an intermediate router, wherein the transmitter and recipient each have an assigned unique identifier known to the intermediate router, the unique identifiers being independent of an IP address of the respective transmitter or recipient, wherein the transmitter and recipient are each arranged to embed their respective unique identifier into voice over IP packets and transmit the voice over IP packets via the intermediate router, the intermediate router being arranged to correlate the unique identifier against last known IP address of the transmitter and recipient and to route received packets in dependence on said last known IP address.

Preferably, the transmitter and recipient transmit voice over IP packets using user datagram protocol (UDP) packets over the IP network.

The intermediate router watches packets and tracks IP addresses against the unique identifier. Should the IP address for a unique identifier change, the intermediate router updates its routing table. As such, if the recipient changes IP address during a VOIP call, the call is not dropped - as soon as the intermediate router identifies the change in IP address it updates its routing table ensuring that packets from the transmitter reach the recipient even though they would have been addressed by the transmitter to a different IP address.

### Brief Description of the Drawings

An embodiment of the present invention will now be described by way of example only, with reference to the accompanying drawings, in which:
Figure 1 is a schematic diagram of a communication system according to an aspect of the present invention; and
Figures 2a and 2b are schematic diagrams of the system of Figure 1 illustrating aspects of operation.

### Detailed Description

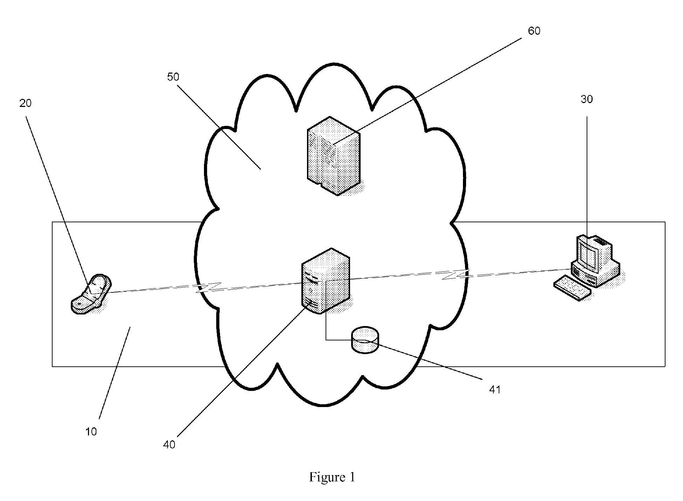

Figure 1 is a schematic diagram of a communication system according to an aspect of the present invention. This particular embodiment is directed to a voice over IP (VOIP) system, although it will be appreciated that other applications and communications types are equally applicable.

The VOIP system 10 includes communications nodes in the form of first and second clients 20, 30 and a communication system in the form of an intermediate router 40 interconnected by an IP data communications network 50. The first and second clients 20, 30 are each able to initiate a VOIP call. It will be appreciated that during the duration of a call, each client will be both a transmitter and a recipient, each transmitting VOIP packets and receiving VOIP packets from the other (via the intermediate router).

The clients 20, 30 and the intermediate router 40 each have an associated IP address that uniquely identifies the respective client/router on the IP data communications network 50. Other entities 60 on the IP network 50 can communicate with the clients or the router by addressing packets to the respective IP address. Similarly, each entity 60 maintains a routing table (database) that provides routing information on where next to send a packet received addressed to a particular IP address.

In contrast to conventional systems, preferred embodiments of the present invention utilise UDP packets for communication between the transmitter and recipient. UDP packets are connectionless and do not include error recovery functionality and the like. However, this functionality is not needed in VOIP communications which operate in real-time. Lost packets would typically be recovered too late to be of any use and are therefore ignored.

In addition, instead of VOIP packets being addressed to the recipient and being sent directly from transmitter to recipient, they are instead addressed to the intermediate router 40. The intermediate router 40 includes a router software application or is connected to a machine executing the router software application. A unique identifier is assigned by the router software application to each client 20, 30 and exchanged during call-setup by a client software application. As such, both clients know the unique identifier of the other. The unique identifier of the transmitter and recipient are embedded in each VOIP UDP packet.

The intermediate router 40 maintains a routing table 41 that cross-references unique identifiers with known IP addresses of the respective client.

Upon receipt of a packet from the client software application, the intermediate router 40 checks the unique identifier of the transmitting client against that recorded in the routing table 41 - if the source IP address differs then the intermediate router 40 updates the routing table 41.

Once the IP address of the transmitting client has been checked, the IP address of the recipient is obtained from the routing table 41 using the unique identifier for the recipient embedded in the packet. The packet is then routed onwards to the recipient using the obtained IP address.

Preferably, the intermediate routing table contains entry tuples [ID IP] for each client. In this way, the IP address can be used during call set-up, with the communications between the two nodes proceeding on the basis of the unique identifiers and the use of streamlined UDPs in lieu of use of the IP address.

It will be appreciated that the intermediate router 40 need not be the only intermediate entity used. Multiple redundant routers may be used or alternatively, different subnets may each operate intermediate routers that the route data between themselves before routing it on to its destination. In either case, routing tables would be synchronised between the routers.

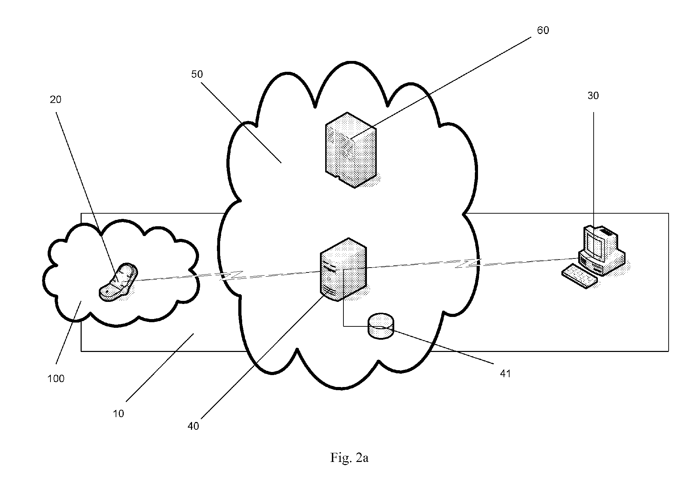

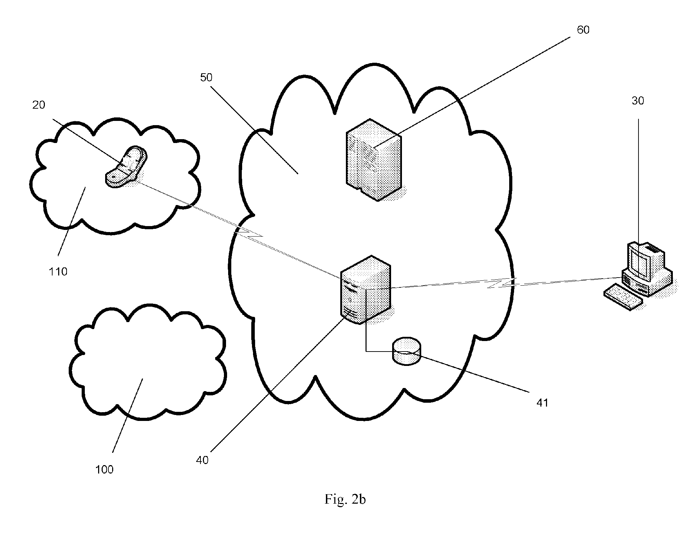

Figures 2a and 2b are schematic diagrams of the system of Figure 1 illustrating aspects of operation.

Figure 2a shows a VOIP session underway between a first client 20 with an IP address allocated from a first wireless network 100 and a second client 30. Packets from the first client 20 are addressed to the intermediate router 40. The router 40 cross references its routing table 41 to obtain the recipients IP address based on the unique identifier embedded in the packet. The packet is then routed onwards. The router learns about the IP address when it receives an IP packet from client. On first packet reception the association is created. On subsequent packet reception the association between ID and IP is updated.

In Figure 2b, the first client has moved from the first wireless network 100 to a second wireless network 110 and its IP address changes. The next time a packet is sent from the first client 20 to the intermediate router 40, its IP address will not match that recorded in the routing table 41 for its respective unique identifier. This is identified and the routing table is updated. The next time a packet is received addressed to the unique identifier of the first client 20, it is routed on correctly to the new IP address.

It will be appreciated that because routing is based on unique identifier rather than IP address, a record of old IP addresses is not needed.

## Claims

1. A communication system arranged to facilitate communication between a first and a second communication nodes over a data communications network, each of the first and second communication nodes including a unique identifier, the unique identifier being independent of any network address assigned to the communication node, comprising:
a client application executable at each of the first and second communication nodes and configured to include the unique identifier of a particular communication node and a recipient node within communications over the data communication network;
a routing database configured to store the unique identifier of a communication node against the network address of the communication node; and
a router configured to route communications to the communications nodes in dependence on the network address recorded against their respective unique identifiers in the routing database.

2. A communication system according to claim 1, wherein the communications system is further arranged to check the network address of a communications node against the routing database upon receipt of a communication from the communication node and to update the network address if different to the network address stored in the routing database.

3. A communication system according to claim 1 or 2, wherein the communication comprises a voice over IP communication.

4. A communication system comprising:
an intermediate router;
a plurality of communication nodes including at least a first communication node and a second communication node, each of the first and second communication nodes including a unique identifier and being arranged to include their respective unique identifier within communications with the intermediate router, the unique identifier being independent of a network address assigned to the communication node,
wherein the intermediate router is arranged to facilitate communication between any of the communication nodes over a data communications network, the intermediate router being arranged to receive communications over the data communications network from a transmitting one of the plurality of the communication nodes for a receiving one of the plurality of communication nodes; and
a routing database arranged to record the unique identifier of the transmitting communication node against the network address of the transmitting communication node from which the communication was received, the intermediate router being arranged to route communications to receiving nodes by obtaining the recorded network address associated with the unique identifier of the receiving node and routing the communication to the recorded network address.

5. A communications system according to claim 4, wherein each of the communication nodes is arranged to address communications to the intermediate router.

6. A communications system according to claim 4 or 5, wherein the intermediate router is arranged to check the network address of a communications node against the routing database upon receipt of a communication from the communication node and to update the network address if different to the network address stored in the routing database.

7. A communications system according to claim 4, 5 or 6, wherein the communication comprises a user datagram protocol packet.

8. A communications system according to any of claims 4 to 7, wherein the network address comprises an internet protocol address.

9. A communications system according to any of claims 4 to 8, further comprising a plurality of intermediate routers, each of the plurality of intermediate routers including a respective routing database and being arranged to synchronise its routing database with the routing databases of the others of the plurality of intermediate routers.

10. A communications system according to any of claims 4 to 9, wherein the communications system comprises a voice over IP system and the communications comprise packetized voice data.

11. A communications method comprising:
assigning a unique identifier to each of a plurality of communication nodes, the unique identifier being independent of a network address associated with the communication node;
addressing communications to nodes using the unique identifier of the recipient communication node and identifying the origin of the communications using the unique identifier of the originating communication node;
directing the addressed communications to an intermediate router;
recording, at the intermediate router, the unique identifier and network address of the originating node;
identifying, at the intermediate router, the network address recorded against the unique identifier of the recipient node; and
routing the communication to the identified network address.

12. A communications method according to claim 11, further comprising: monitoring the network address of the originating node against its unique identifier and, if the network address changes, updating the recorded network address to the changed network address.

13. A communications method according to claim 11 or 12, further comprising synchronising the recorded unique identifiers and network addresses amongst a plurality of intermediate routers.

14. A communications method according to claim 11, 12 or 13, further comprising transmitting the communications using a user datagram protocol.

15. A computer program comprising computer program code means for performing all of the steps of any of claims 11 to 14 when said program is run on a computer.
